# EUROPÄISCHE PATENTSCHRIFT

(11) **EP 1 593 899 B1**
(45) Veröffentlichungstag und Bekanntmachung des Hinweises auf die Patenterteilung: **08.08.2007**
(21) Anmeldenummer: 05103471.8
(22) Anmeldetag: 27.04.2005
(51) Int. Cl.: F16L 13/14

(54) **Pressverbindungsanordnung**
Compression fitting arrangement
Raccord à sertir

(30) Priorität: 07.05.2004 DE 202004007291 U
(43) Veröffentlichungstag der Anmeldung: 09.11.2005
(73) Patentinhaber: VIEGA GmbH & Co. KG., 57439 Attendorn (DE)
(72) Erfinder: Viegener, Walter, 57439 Attendorn (DE)
(74) Vertreter: Cohausz & Florack

(56) Entgegenhaltungen:
- DE-A1- 10 207 201
- DE-U1- 29 721 760

## Beschreibung

Die vorliegende Erfindung betrifft eine Pressverbindungsanordnung mit einem an einem Fitting oder einer Armatur ausgebildeten Stutzen aus einem kaltformbaren Material, gemäß dem Oberbegriff des Patentanspruches 1.

Aus der DE 297 21 760 ist eine Pressverbindung zwischen einem Fitting und einem Metallrohrende bekannt, wobei an dem Fitting eine Aufnahme für einen Dichtring und eine beabstandet angeordnete Aufnahme für einen Schneidring vorgesehen sind. In den Stutzen wird ein Rohrende eingeschoben und anschließend eine radiale Verpressung vorgenommen, um eine abgedichtete Verbindung herzustellen, wobei der Schneidring für eine mechanische Fixierung des Rohrendes sorgt. Die Vorsehung einer Aufnahme für den Dichtring und einer Aufnahme für den Schneidring ist vergleichsweise aufwendig und zudem lässt sich der Stutzen nur schlecht im Umformverfahren herstellen, da bei der Herstellung der zweiten Aufnahme die Gefahr besteht, dass die bereits hergestellte erste Aufnahme wieder verformt wird. In der Praxis werden daher entsprechende Stutzen gegossen und anschließend nachbearbeitet.

Aus der US 5 108 134 ist eine weitere Pressverbindung bekannt, bei der an einem Stutzen ein Schneidring und ein Dichtring benachbart zueinander angeordnet sind. Beim Verpressen des Stutzens besteht die Gefahr, dass der Dichtring beschädigt wird und somit eine Dichtigkeit nicht gewährleistet werden kann. Zudem befmdet sich der Schneidring auf der zum Rohrende hin gewandten Seite im flüssigkeitsgeführten Bereich, sodass eine Verschmutzung des Leitungssystems durch den Schneidring nicht ausgeschlossen werden kann.

In der DE-A1-102 07 201 ist eine Pressverbindungsanordnung offenbart, die alle Merkmale des Oberbegriffs des Anspruchs 1 umfasst.

Es ist daher Aufgabe der vorliegenden Erfindung eine Pressverbindungsanordnung zu schaffen, die bei einfachem Aufbau eine dauerhafte Abdichtung gewährleistet.

Diese Aufgabe wird mit einer Pressverbindungsanordnung mit den Merkmalen des kennzeichnenden Teils des Anspruches 1 gelöst.

Zwischen dem Dichtring und dem Schneidring ist ein Trennring vorgesehen, mittels dem der Schneidring beabstandet von dem Dichtring gehalten ist. Dadurch muss nur eine einzelne ringförmige Aufnahme an dem Stutzen ausgeformt sein, in der dann Dichtring, Trennring und Schneidring gehalten sind. Die Anordnung eines Trennringes zwischen Dichtring und Schneidring stellt dabei eine Vereinfachung gegenüber der getrennten Ausbildung von Aufnahmen dar, wobei durch den Trennring sichergestellt ist, dass der Dichtring beim Verpressen durch den Schneidring nicht beschädigt wird und somit eine dauerhafte Abdichtung gewährleistet werden kann.

Erfindungsgemäß ausbildet der Trennring dem Dichtring einen Raum, in den der Dichtring eingedrückt werden kann.

Gemäß einer bevorzugten Ausführungsform der Erfindung sind der Dichtring, der Trennring und der Schneidring als vormontierter Einheit in der im Wesentlichen U-förmigen Aufnahme vor einem Verpressen vorfixiert gehalten. Gerade wenn die Aufnahme zwei sich nach innen erstreckende Schenkel aufweist, ist die vormontierte Einheit in axialer Richtung gesichert gehalten und kann beim Transport nicht verloren gehen. Ferner kann die Anordnung der einzelnen Bauteile nicht versehentlich verwechselt werden.

Vorzugsweise besteht der Stutzen aus Metall und ist durch Umformung hergestellt. Dadurch kann ein entsprechender Fitting aus einem Rohrabschnitt hergestellt werden, wobei die Aufnahme durch Aufweiten des Rohrabschnittes herstellbar ist und somit auch große Durchmesser über beispielsweise 50 mm kostengünstig herstellbar sind. Zum Umformen können an sich bekannte Pressen und andere Werkzeuge eingesetzt werden. Dies vereinfacht die Herstellung des Stutzens, der dann nicht mehr aus gegossenem Material mit anschließender Oberflächenbearbeitung hergestellt werden muss.

Gemäß einer weiteren Ausführungsform der Erfindung weist der Schneidring mehrere Schneidzähne auf, die auf der zum Rohrende gewandten Seite angeordnet sind und sich beim Verpressen in das Material des Rohrendes eingraben. Der Schneidring bietet somit eine Sicherheit gegen ein Herausziehen des Rohres, in dem die gegenüber einer radialen Richtung geneigt angeordneten Schneidzähne können dabei besonders gut für eine axiale Sicherung der Pressverbindungsanordnung sorgen. Der Schneidring kann an der gegenüberliegenden Seite der Schneidzähne dabei an einer Seitenwand der Aufnahme abgestützt sein, sodass eine Zugbewegung des Rohres unmittelbar auf den Stutzen abgetragen werden kann.

Der Dichtring kann auf der zum Rohrende gewandten Seite in der Aufnahme gehalten sein. Dadurch ist der Trennring und der Schneidring auf der von der Flüssigkeit abgewandten Seite angeordnet und kann das Leitungssystem nicht verschmutzen.

Vorzugsweise weist der Trennring auf seiner vom Rohrende abgewandten äußeren Seite eine zum Dichtring hervorstehende abgerundete Kante auf. Dadurch besitzt der Trennring unterhalb der abgerundeten Kante eine zurückgesetzte Aufnahme, in die beim Verpressen der Dichtring eingefügt werden kann. Denn durch die Komprimierung des Dichtringes in radiale Richtung wird dessen axiale Erstreckung größer und der Trennring bietet dem Dichtring einen Raum, in den dieser eingedrückt werden kann. Dabei kann der Trennring in axialer Richtung auch formschlüssig an dem Dichtring und dem Schneidring anliegen.

Für eine leichte Montage ist der Trennring umlaufend geschlossen aus einem elastischen Material, beispielsweise einem Kunststoff ausgebildet und kann durch leichte elastische Verformung in die Aufnahme des Stutzens eingefügt werden.

Die Erfindung wird nachfolgend anhand eines Ausführungsbeispieles mit Bezug auf die beigefügten Zeichnungen näher erläutert. Es zeigen:
- Figur 1: eine geschnittene Seitenansicht eines Ausführungsbeispiels einer erfmdungsgemäßen Pressverbindungsanordnung;
- Figur 2A, 2B: zwei Ansichten des Schneidrings der Pressverbindungsanordnung der Figur 1;
- Figuren 3A-3C: modifizierte Ausführungsbeispiele für Schneidringe;
- Figur 4: eine Schnittansicht des Trennringes der Pressverbindungsanordnung der Figur 1, und
- Figur 5A, 5B: Schnittansichten gemäß modifizierten Trennringen.

Eine Pressverbindungsanordnung 1 umfasst einen Fitting 2 aus einem Metall, beispielsweise Kupfer, Stahl oder einer anderen Metalllegierung. In den Stutzen 2 ist ein Rohrende 3 eingefügt, das ebenfalls aus einem Metall hergestellt ist. Es ist möglich, ein Rohrende 3 aus einem Verbundwerkstoff vorzusehen, das dann beispielsweise mit einer Stützhülse verstärkt ist. Das Rohrende 3 ist maximal bis zu einem Anschlag 4 einschiebbar, der durch eine leichte radiale Verjüngung des Stutzens 2 ausgebildet ist.

Endseitig an dem Stutzen 2 ist eine Aufnahme 5 ausgebildet, die einen gegenüber dem übrigen Stutzen 2 vergrößerten Durchmesser besitzt und im Querschnitt im Wesentlichen U-förmig ausgebildet ist und einen endseitigen Schenkel 7 und einen zum übrigen Stutzen 2 gewandten Schenkel 6 aufweist.

In der Aufnahme 5 ist eine vorfixierte Einheit bestehend aus einem Dichtring 8, einem Trennring 9 und einem Schneidring 10 angeordnet, die in axiale Richtung durch die Schenkel 6 und 7 gesichert sind und nicht versehentlich aus dem Stutzen 2 herausfallen können.

Der Schneidring 10 weist schräg nach innen hervorstehende Schneidzähne 11 auf, die mit einer spitzen Kante beim 12 in das Material des Rohrendes 3 eingreifen. Der Trennring 9 aus Kunststoff, ist umlaufend geschlossen ausgebildet und beabstandet den Schneidring aus Metall, beispielsweise Stahl, und den Dichtring 8 aus Gummi. Der Trennring 9 besitzt dabei eine geringere radiale Erstreckung als der Spalt zwischen Rohrende 3 und der Wand der Aufnahme 5, sodass der Trennring 9 beim Verpressen nur wenig verformt wird.

Bei einem Verpressen wird die Aufnahme 5 in radiale Richtung auf das Rohrende 3 gedrückt, wobei sich die Schneidzähne 11 in das Material des Rohrendes 3 eingraben. Ferner wird der Dichtring 8 gegen das Rohrende 3 für eine dauerhafte Abdichtung gedrückt. Dabei wird der Dichtring 8 formschlüssig an den Trennring 9 gepresst. Ferner wird der Schenkel 7 der Aufnahme 5 gegen das Rohrende 3 gedrückt, wobei der Schenkel 7 leicht nach innen geneigt ist und eine umlaufende Kante 13 zu dem Rohrende 3 gewandt ist, die nach dem Verpressen ebenfalls an dem Rohrende 3 anliegen kann. Der Schneidring 10 ist zumindest an dem Schenkel 7 in axialer Richtung abgestützt.

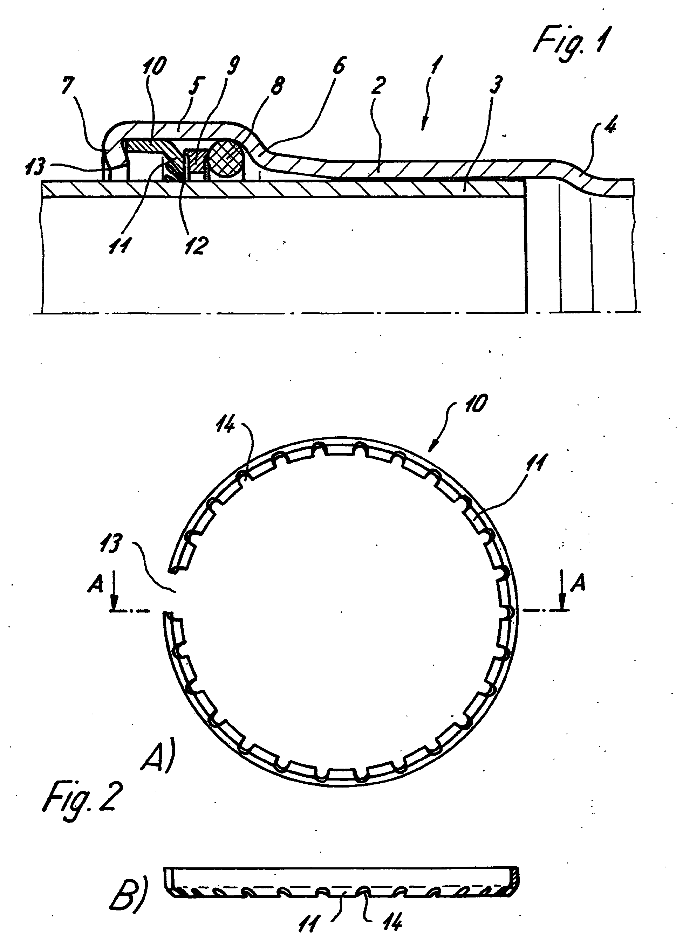

In den Figuren 2A und 2B ist der Schneidring 10 gezeigt, der über den Umfang verteilt eine Vielzahl von Schneidzähnen 11 aufweist, zwischen denen Spalte 14 vorgesehen sind. Der Schneidring 10 ist ringförmig ausgebildet, weist aber eine Unterbrechung an einem Öffnungsabschnitt 13 auf, sodass der Schneidring 10 aus Metall zusammengedrückt werden kann, um ihn in die Aufnahme 5 einzufügen.

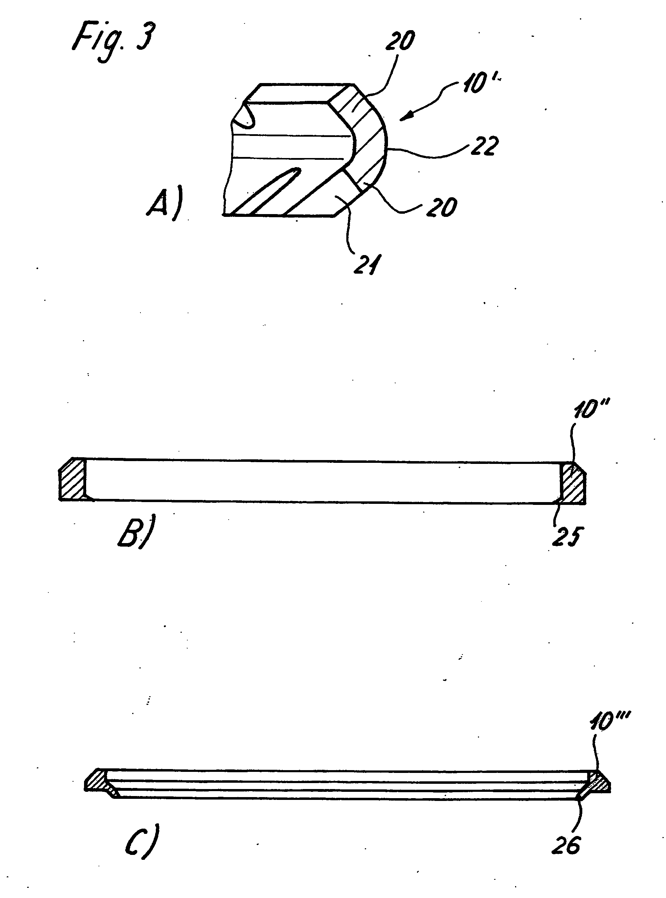

In Figur 3A ist eine Querschnittsansicht eines modifizierten Schneidringes 10' gezeigt. Der Schneidring 10' weist zwei radial nach innen hervorstehende Schenkel 20 auf, an denen Schneidzähne 21 ausgebildet sind, sodass bei einem Verpressen an einer Rückseite 22 in radiale Richtung sich an beiden Schenkeln 20 die Schneidzähne 21 in das Material des Rohrendes 3 eingraben.

Bei dem in Figur 3B gezeigten Ausführungsbeispiel ist ein Schneidring 10" vorgesehen, bei dem in radialer Richtung hervorstehende Schneidzähne 25 ausgebildet sind, die im Wesentlichen in radiale Richtung hervorstehen und in axiale Richtung gesehen außermittig angeordnet sind.

Bei dem in Figur 3C gezeigten Ausführungsbeispiel eines Schneidringes 10''' sind auf ähnliche Weise schräg nach innen hervorstehende Schneidzähne 26 vorgesehen, die gegenüber der radialen Richtung etwa um 40 bis 50° geneigt ausgebildet sind. Dadurch wird beim Verpressen des Schneidringes 10''' das Rohrende 3 besonders gut in axiale Richtung gesichert.

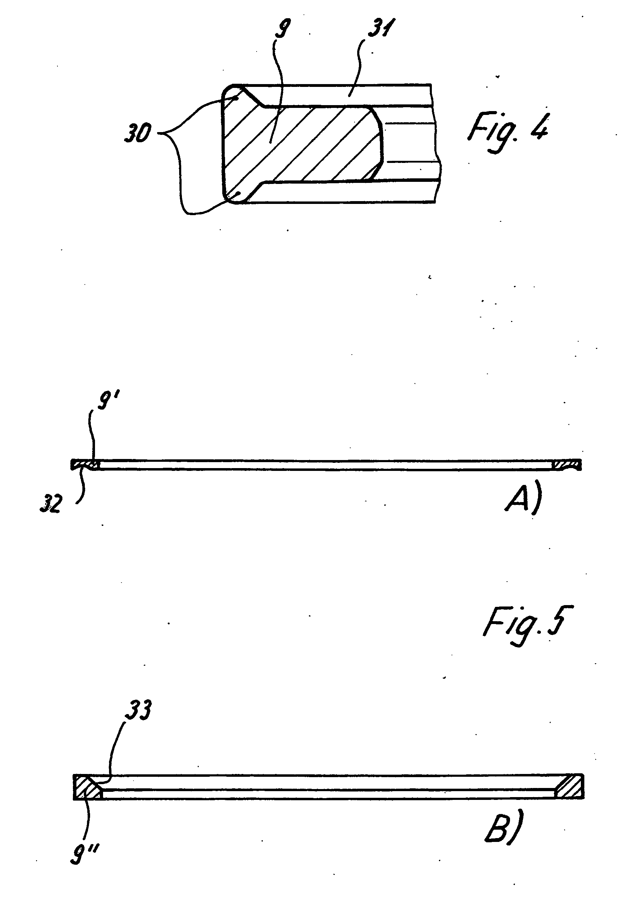

In Figur 4 ist eine vergrößerte Schnittansicht des Trennringes 9 gezeigt. Der Trennring 9 ist im Wesentlichen T-förmig ausgebildet und weist am äußeren Umfang in axiale Richtung hervorstehende abgerundete Kanten 30 auf, sodass auf der radialen Innenseite der Kanten 30 eine Aufnahme 31 an dem Trennring 9 ausgebildet ist. Der Trennring 9 besteht aus einem elastischen Kunststoff, beispielsweise POM oder einem anderen geeigneten Werkstoff.

In Figur 5A ist eine alternative Ausführungsform eines Trennringes 9' dargestellt. Der Trennring weist an einer Seite eine Aufnahme 32 auf, in der der Dichtring 10 im unverpressten Zustand formschlüssig anlegbar ist. Im Übrigen ist der Trennring 9' im Wesentlichen scheibenförmig ausgebildet und besitzt einen minimalen Raumbedarf.

Der in Figur 5B dargestellte Trennring 9" ist im Wesentlichen dreieckförmig ausgebildet und weist eine schräge Kante 33 auf, wobei an dieser Kante ein Dichtring 10 vorgesehen sein kann, der beim Verpressen in den zwischen der Kante 33, dem Rohrende 3 gebildeten Hohlraum eingedrückt werden kann.

Für die Herstellung der Pressverbindungsanordnung wird zunächst der Stutzen 2 durch Umformung hergestellt, beispielsweise werden durch Pressen und Drückvorrichtungen ein Wulst hergestellt, an dem ein Schenkel 7 zur Herstellung der Aufnahme 5 abgekantet wird. Anschließend wird die Einheit aus Dichtring 8, Trennring 9 und Schneidring 10 in die Aufnahme 5 montiert. An der Baustelle wird dann ein Rohrende 3 eingeschoben und die Aufnahme 5 in radialer Richtung verpresst.

Die Erfindung ist nicht auf das dargestellte Ausführungsbeispiel beschränkt. Die Geometrie des Schneidringes 10 und des Trennringes 9 kann variieren. Ferner können auch andere Werkstoffe eingesetzt werden.

## Patentansprüche

1. Pressverbindungsanordnung (1) mit einem an einem Fitting oder einer Armatur ausgebildeten Stutzen (2) aus einem kaltumformbaren Material, in den ein Rohrende (3) einschiebbar ist, wobei der Stutzen (2) eine ringförmige Aufnahme (5) aufweist, in der ein metallischer Schneidring (10) und ein Dichtring (8) gehalten sind, wobei zwischen dem Dichtring (8) und dem Schneidring (10) ein Trennring (9, 9', 9") vorgesehen ist, mittels dem der Schneidring (10) beabstandet von dem Dichtring (8) gehalten ist, **dadurch gekennzeichnet, dass** der Trennring (9,9',9'') dem Dichtring (10) einen Raum ausbildet, in den der Dichtring (10) eingedrückt werden kann.

2. Pressverbindungsanordnung nach Anspruch 1, **dadurch gekennzeichnet, dass** der Trennring (9) im wesentlichen T-förmig ausgebildet ist und am äußeren Umfang in axiale Richtung hervorstehende abgerundete Kanten (30) aufweist, wobei auf der radialen Innenseite der Kante (30) eine Aufnahme (31) an dem Trennring (9) ausgebildet ist.

3. Pressverbindungsanordnung nach Anspruch 1, **dadurch gekennzeichnet, dass** der Trennring (9') im wesentlichen scheibenförmig ausgebildet ist und an einer Seite eine Aufnahme (32) aufweist, in der der Dichtring (10) im unverpressten Zustand formschlüssig anlegbar ist.

4. Pressverbindungsanordnung nach Anspruch 1, **dadurch gekennzeichnet, dass** der Trennring (9") im wesentlichen dreieckförmig ausgebildet ist und eine schräge Kante (33) aufweist, wobei an dieser Kante der Dichtring (10) vorgesehen sein kann und wobei der Dichtring (10) beim Verpressen in den zwischen der Kante (33) und dem Rohrende (3) gebildeten Hohlraum eingedrückt werden kann.

5. Pressverbindungsanordnung nach einem der Ansprüche 1 bis 4, **dadurch gekennzeichnet, dass** der Dichtring (8), der Trennring (9) und der Schneidring (10) als vormontierte Einheit in der im Wesentlichen U-förmigen Aufnahme (5) vor einem Verpressen vorfixiert gehalten sind.

6. Pressverbindungsanordnung nach einem der Ansprüch 1 bis 5, **dadurch gekennzeichnet, dass** der Stutzen (2) aus Metall besteht und durch Umformung hergestellt ist.

7. Pressverbindungsanordnung nach einem der Ansprüche 1 bis 6, **dadurch gekennzeichnet, dass** der Schneidring (10) mehrere Schneidzähne (11) aufweist, die auf der zum Rohrende (3) gewandten Seite angeordnet sind und sich beim Verpressen in das Material des Rohrendes (3) eingraben.

8. Pressverbindungsanordnung nach einem der Ansprüche 1 bis 7, **dadurch gekennzeichnet, dass** der Dichtring (8) auf der zum Rohrende (3) gewandten Seite in der Aufnahme (5) gehalten ist.

9. Pressverbindungsanordnung nach einem der Ansprüche 1 bis 8, **dadurch gekennzeichnet, dass** der Trennring (9) umlaufend geschlossen aus einem elastischen Material ausgebildet ist.

10. Pressverbindungsanordnung nach einem der Ansprüche 1 bis 9, **dadurch gekennzeichnet, dass** der Trennring (9) aus Kunststoff hergestellt ist.

## Claims

1. Pressed-connection arrangement (1) having a connection piece (2) made of a cold-formable material, which is constructed on a fitting or a mounting part and into which a pipe end (3) can be pushed, the connection piece (2) having an annular receiver (5) in which a metallic cutting ring (10) and a sealing ring (8) are held, in which a separating ring (9, 9', 9") is provided between the sealing ring (8) and the cutting ring (10), by means of which separating ring (9), the cutting ring (10) is held at a distance from the sealing ring (8), **characterised in that** the separating ring (9, 9', 9") forms a space for the sealing ring (10) into which the sealing ring (10)¹ can be pressed.

2. Pressed-connection arrangement according to claim 1, **characterised in that** the separating ring (9) is essentially T-shaped and has rounded edges (30) on the external perimeter projecting in axial direction, while a receiver (31) is formed on the separating ring (9) on the radial inner side of the edge (30).

3. Pressed-connection arrangement according to claim 1, **characterised in that** the separating ring (9') is essentially disc-shaped and has a receiver (32) on one side, into which the sealing ring (10) can enter in positive engagement when not pressed together.

4. Pressed-connection arrangement according to claim 1, **characterised in that** the separating ring (9") is essentially triangular in shape and has a sloped edge (33), while the sealing ring (10) can be provided on this edge and where the sealing ring (10), during the pressing together, can be pressed into the cavity formed between the edge (33) and the pipe end (3).

5. Pressed-connection arrangement according to one of claims 1 to 4, **characterised in that** the sealing ring (8), the separating ring (9) and the cutting ring (10) are held in a prefixed manner as a preassembled unit in the essentially U-shaped receiver (5) before a pressing-together.

6. Pressed-connection arrangement according to one of claims 1 to 5, **characterised in that** the connection piece (2) is made of metal and produced by forming.

7. Pressed-connection arrangement according to one of claims 1 to 6, **characterised in that** the cutting ring (10) has several cutting teeth (11) which are arranged on a side facing the pipe end (3) and, during the pressing-together, dig into the material of the pipe end (3).

8. Pressed-connection arrangement according to one of claims 1 to 7, **characterised in that** the sealing ring (8) is held in the receiver (5) on the side facing the pipe end (3).

9. Pressed-connection arrangement according to one of claims 1 to 8, **characterised in that** the separating ring (9) is constructed to be closed around the circumference and made from an elastic material.

10. Pressed-connection arrangement according to one of claims 1 to 9, **characterised in that** the separating ring (9) is made from plastic.

## Revendications

1. Agencement de raccord à sertir (1) comprenant une tubulure (2) formée sur un élément de raccord ou de robinetterie, faite en une matière se prêtant à une déformation à froid, dans laquelle on peut emmancher un bout de tube (3), la tubulure (2) présentant un logement annulaire (5) à l'intérieur duquel sont maintenues une bague coupante métallique (10) et une bague d'étanchéité (8), une bague séparatrice (9, 9', 9") étant prévue entre la bague d'étanchéité (8) et la bague coupante (10), bague séparatrice au moyen de laquelle la bague coupante (10) est maintenue espacée de la bague d'étanchéité (8),
**caractérisé en ce que** la bague séparatrice (9, 9', 9") définit, pour la bague d'étanchéité (10), un espace, dans lequel la bague d'étanchéité (10) peut pénétrer lorsqu'elle est comprimée.

2. Agencement de raccord à sertir selon la revendication 1, **caractérisé en ce que** la bague séparatrice (9) est configurée essentiellement en forme de T et présente, à sa périphérie extérieure, des flancs arrondis (30) saillant dans le sens axial, un logement (31) étant aménagé dans la face radiale intérieure du flanc (30), sur la bague séparatrice (9).

3. Agencement de raccord à sertir selon la revendication 1, **caractérisé en ce que** la bague séparatrice (9') est configurée essentiellement en forme de rondelle et présente, sur un côté, un logement (32), contre lequel la bague d'étanchéité (10) peut être mise en contact, avec conjugaison des formes, à l'état non comprimé.

4. Agencement de raccord à sertir selon la revendication 1, **caractérisé en ce que** la bague séparatrice (9") est configurée essentiellement en forme de triangle et comporte un flanc oblique (33), la bague d'étanchéité (10) pouvant être prévue sur ce flanc oblique, et la bague d'étanchéité (10) pouvant être comprimée, lors du sertissage, à l'intérieur de la cavité formée entre le flanc (33) et le bout de tube (3).

5. Agencement de raccord à sertir selon l'une des revendications 1 à 4, **caractérisé en ce que** la bague d'étanchéité (8), la bague séparatrice (9) et la bague coupante (10) sont maintenues et provisoirement fixées, en tant qu'ensemble pré-monté, dans le logement (5) essentiellement formé en U.

6. Agencement de raccord à sertir selon l'une des revendications 1 à 5, **caractérisé en ce que** la tubulure (2) est faite en métal et est produite par déformation.

7. Agencement de raccord à sertir selon l'une des revendications 1 à 6, **caractérisé en ce que** la bague coupante (10) comporte plusieurs dents coupantes (11), qui sont disposées du côté tourné face au bout de tube (3) et qui, lors du sertissage, s'enfoncent dans la matière du bout de tube (3).

8. Agencement de raccord à sertir selon l'une des revendications 1 à 7, **caractérisé en ce que** la bague d'étanchéité (8) est maintenue dans le logement (5) du côté tourné vers le bout du tube (3).

9. Agencement de raccord à sertir selon l'une des revendications 1 à 8, **caractérisé en ce que** la bague séparatrice (9) présente un pourtour fermé continu et est réalisée en une matière élastique.

10. Agencement de raccord à sertir selon l'une des revendications 1 à 9, **caractérisé en ce que** la bague séparatrice (9) est réalisée en matière plastique.
